# EUROPEAN PATENT APPLICATION

(11) **EP 4 488 529 A1**
(43) Date of publication of application: **08.01.2025**
(21) Application number: 23184146.1
(22) Date of filing: 07.07.2023
(51) Int. Cl.: F16B 5/01, F16B 19/02

(54) **INSERT INSTALLATION INTO A SANDWICH STRUCTURE, SANDWICH STRUCTURE AND HOLLOW BODY**

(71) Applicant: Airbus Operations GmbH, 21129 Hamburg (DE)
(72) Inventor: Merz, Ludger, 21129 Hamburg (DE)

(57) **Abstract**

Disclosed is a method for placing an insert (12) in a sandwich structure (16) such as a honeycomb structure, wherein a potting mass filling room (33) is provided in a sandwich hole having a room wall preventing penetration of the honeycomb chambers, a sandwich structure and a hollow body forming the filling room.

## Description

The present invention refers to a method to install an insert in a sandwich structure according to the preamble of claim 1, a sandwich structure and a hollow body.

Due to their favourable ratio of size to weight, sandwich structures are commonly used in aircrafts. Typical examples are monument wall panels, cabin lining panels and cabin floor panels. Basically, a sandwich structure has two closed thin cover sheets and a thick core element. The core element is positioned between the cover sheets and bonded to their inner surfaces. It has a plurality of chambers or pores, which can be in fluid connection with each other or which are separated from each other. An exemplary core element is a so-called honeycomb structure.

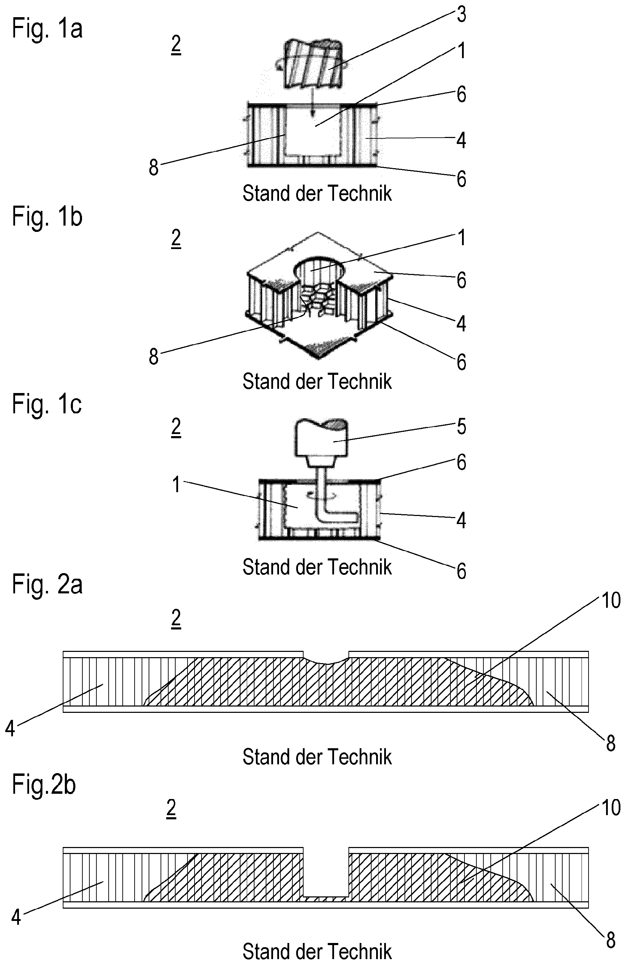

However, due to the plurality of chambers (pores), installing an insert such as mechanical fastening means, for instance a screw and a screw thread in the sandwich structure, or just preparing an insert in the way of a through hole, is challenging. A known installation method is shown in the Figures 1a, 1b, 1c, 2a and 2b. First, a bore hole is prepared in a sandwich structure by a drilling 3 tool. Then, the hole 1 is widened by a reaming tool 5 such the core element has a greater inner hole diameter than the cover sheets 6. Thereby, chambers 8 in the area of the hole 1 are destroyed. Then, in order to stabilise the sandwich structure 2 in the area of the hole 1, a potting mass 10 such as an epoxy-based compound is filled in. The potting mass 10 is pressed in the core element 4 and the destroyed chambers 8 until it is distributed throughout the destroyed chambers 8. As can be seen in Figures 2a and 2b, the distribution and such the amount of potting mass 10 can differ significantly. The volume of the potting mass 10 depends randomly on the destroyed core element 4. In consequence, measured weights of the potting mass 10 are often significantly higher than specified, for instance six times higher. Therefore, a controllable potting mass volume (amount) would provide significant weight opportunities.

It is an object of the present invention to provide a method for installing an insert in a sandwich structure enabling a controllable potting mass volume, a weight optimised sandwich structure having at least one installed insert and hollow body supporting the proposed method.

The object is achieved by a method with the features of claim 1 and by a sandwich structure with the features of claim 7, and a hollow body according to claim 8. Advantageous embodiments are disclosed in the dependent claims, the description and the figures.

According to an inventive method for placing an insert in a sandwich structure which has two cover sheet and a core element, such as a honeycomb structure, and which is bonded to inner surfaces of the cover sheets, the following steps are proposed:
- Providing a hole in the sandwich structure for receiving the insert;
- Widening the hole such that the core element has a greater inner hole diameter than the at least one cover sheet.
- Providing a tube-like hollow body in the hole restricting a filling room for a potting mass, wherein the hollow body is such provided in the core element that the filling room extends between opposite inner surface areas of the cover sheets; and
- Filling in the potting mass such that the potting mass is distributed on the inner surface areas.

As the hollow body forms a barrier for the potting mass, the potting mass is kept inside the filling room and cannot be distributed outside the filling room to the destroyed chambers. Thus, the volume of the potting mass can be precisely calculated. As the potting mass is in direct contact with the inner surface areas, the insert is ready for withstanding high loads. The term insert is used for any mechanical fasting element such as a screw threat which is hold by the cured potting mass in its desired position inside the hollow body and thus inside the hole, but also for a through hole that is created after the potting mass is cured in the hollow body.

If the hole is a through hole, the opposite inner surface areas forming inner annular undercuts created by widening the hole diameter in the core element. If the hole is a blind hole, on the one side (hole in cover sheet) the inner surface area is an inner annular undercut and on the opposite side (no hole in cover sheet) the inner surface area is a circular area, both also created by widening the hole diameter in the core element.

In a preferred embodiment, the hollow body is compressed before installation and expands in the sandwich structure after installation. By means of this, the hollow body is aligned automatically in the hole and the filling room is automatically opened.

In one embodiment the hollow body comprises a stretchable hull and a separate flexible stiffener. The stiffener is positioned inside the hull. The hull is forming a barrier for the potting mass. In particular, the stiffener shapes the hull.

Alternatively, a hollow body can be used comprising a stretchable hull having integrated stiffening characteristics. By means of this, the installation of the insert is more simplified.

In another embodiment, the hollow body is created directly in the hole by laying material lines spirally over each other. This can be done by 3D-printing. If necessary, a support structure can be provided in order to support the laid material lines and protect them against collapsing as long as they are not cured sufficiently.

In order to control from outside, just be looking at the cover sheets, at least one riser opening is provided in at least one of the inner surface areas. As soon as the filling mass enters the rise opening, the filling process is stopped. Preferably, the at least one riser opening is positioned in a radial outer position of the at least one inner surface area. More preferably, several riser openings are provided.

According to the invention, a sandwich structure has two cover sheets and a core element such as a honeycomb structure. The core element is bonded to inner surfaces of the cover sheets. An insert is provided in a hollow body positioned in a hole of the sandwich structure and filled with a potting mass. The hollow body defines a filling room for the potting mass and extends between opposite inner surface areas of the cover sheets such that the potting mass is distributed on the inner surface areas.

As the hollow body forms a barrier for the potting mass, the potting mass is kept inside the filling room and cannot be distributed outside the filling room to the destroyed chambers. Thus, the volume of the potting mass can be precisely calculated in advance and the sandwich structure is weight optimised.

According to the invention, a compressible and self-expandable hollow body which is adapted to be used in an inventive method or to be installed in an inventive sandwich structure, has a tube-like shape in its self-expanded mode and a circumferentially wall forming a radially potting mass barrier.

Due to the compressible and self-expandable characteristics, the installation in the hole, the fixation of the hollow body in the hole and the filling in of the potting mass is simplified. In particular the hollow body opens itself radially and (axially) such that at least end portions of its hull (potting mass barrier) move in direct contact along the inner surface of the cover sheets thus forming the inner surface areas.

In one embodiment, the hollow body comprises a stretchable hull and a separate flexible stiffener. The hull defines a potting mass barrier and restricts radially the filling room. By using two separate parts, both parts can be functionally optimised. The hull can be an elastic foil, but also an elastic fabric such as a fabric having a mesh size which is small enough to avoid any escape of the uncured potting mass out of the filling room.

In another embodiment, the hollow body comprises a stretchable hull having integrated stiffening characteristics. By integrating the stiffener in the hull, the number of parts is reduced. An exemplary hull has a wall thickness of between 0,25mm and 1mm and can be a 3D printed Thermoplastic Urethane Resin (TPU) or a 3D printed Stereolithography (SLA) resin.

The hollow body can have a constant diameter over its entire length. Thus, the hollow body has a cylindrical shape.

Alternatively, hollow body has auxetic shape characteristics. This means, the overall structure become thicker perpendicular to the applied force. The hollow body expands when it is stretched and contracts when it is compressed.

Further on, the hollow body can have a radially reduced centre portion compart to its end portions. Thus, the hollow body has a diabolo shape.

In what follows, preferred embodiments of the present invention are explained with respect to the accompanying drawings. As is to be understood, the various elements and components are depicted as examples only, may be facultative and/or combined in a manner different than that depicted. Reference signs for related elements are used comprehensively and not necessarily defined again for each figure. Shown is schematically in
Fig. 1a, 1b and 1c: a known method for opening a recess in a sandwich structure;
Fig. 2a and 2b: cross-sectional views of inserts installed in a sandwich structure according to the prior art;
Fig. 3a and 3b: cross-sectional views of a sandwich structure showing an installed insert in an inventive hollow body filled with potting mass;
Fig. 4a, 4b and 4c: different embodiments of the inventive hollow body;
Fig. 5a to 5f: steps of an inventive method to place an insert configured as a blind hole;
Fig. 6a, 6b and 6c: steps of an inventive method to install an insert configured as a blind hole;
Fig. 7a, 7b and 7c: steps of an inventive method to install an hollow body which is added by additive manufacturing in a sandwich hole directly;
Fig. 8a, 8b and 8c: exemplary cross-sectional views of installed hollow bodies filled with a potting mass; and
Fig. 9: a cross sectional view of an inventive sandwich showing riser openings.

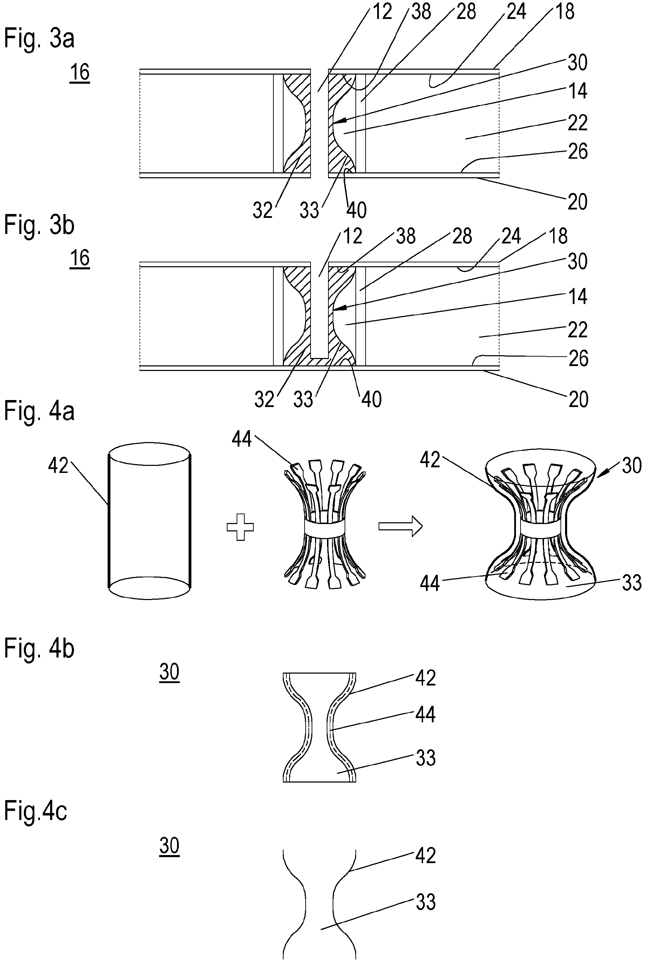

In Figure 3a and 3b inserts are shown which are installed in a hole of a sandwich structure according to the inventive method. Referring to aircrafts, the sandwich structure can be used for monument walls, floor panel and cabin linings, for instance.

The sandwich structure 16 has an upper cover sheet 18 and a lower cover sheet 20. Between the cover sheets 18, 20 a core element 22 is positioned. The core element 22 is bonded to inner surfaces 24, 26 of the cover sheets 18, 20. An exemplary core element 22 has a honeycomb structure with a plurality of chambers 28 (not shown).

In order to fix the sandwich structure 16 to an ambient structure (not shown) or to fix a part such as an overhead compartment (not shown) at the sandwich structure 16, the inserts 12 are provided. The inserts 12 are located in a hole 14 of the sandwich structure 16. In Figure 3a, the insert 12 is a through hole extending through the upper cover sheet 18, the core element 22 and the lower cover sheet 20. In Figure 3b, the insert 12 is a screw thread, whereas the hole 14 is a blind hole that only extends through the upper cover sheet 18 into the core element 22.

In both embodiments, the insert 12 is radially surrounded by a hollow body. A space between the insert 12 and the hollow body 30 is filled with a potting mass 32 such as an epoxy resin.

The hollow body 30 has a tube-like shape and defines a filling room 33 for the potting mass 32 preventing that the potting mass 32 escapes radially into destroyed chambers 28 of the core element. It is compressible and self-expandable, such that in its installed position, its opposite end portions 34, 36 are in direct contact with the inner surfaces 24, 26 of the cover sheets 18, 20. Due to the self-expandable characteristics, after their positioning in the hole 14, its end portions 38, 40 move automatically radially outwards "beyond" the inner surfaces 18, 20. By means of this, opposite inner surface areas 38, 40 are created which are concentrically to the hole 14 and which form an undercut for the potting mass 10. As shown in Figure 3a, if the hole 14 is a through hole, both inner surface areas 38, 40 have an annular shape. Whereas, as shown in Figure 3b, if the hole 14 is a blind hole, one inner surface area 24 has an annular shape (upper cover sheet 18) and the opposite inner surface area 26 has a circular shape (lower cover sheet 20).

In Figure 4a, 4b and 4c exemplary hollow bodies 30 are shown. Basically, each embodiment has a potting mass 32 proof hull 42 defining a filling room 33 for the potting mass 32. The hull 42 acts as a barrier and prevents that potting mass 32 which is filled in the filling room cannot escape radially to the outside.

In the embodiments shown in Figure 4a and 4b, the hull 42 is flexible (stretchable), whereas in the embodiment shown in Figure 4c the hull 42 is stiff. Exemplary hulls 42 are made of a foil bag material or a fabric. If the hull 42 is made as a fabric, fabric meshes are adjusted to the viscosity of the potting mass 32 in order to avoid any penetration.

According to the embodiments shown in Figures 4a, and 4b, the hollow body 30 further has a stiffener 44. The stiffener 44 is compressible and self-expandable such that if a compression is terminated, the stiffener 44 takes its initial shape again. The stiffener can be made via 3D-printing.

As shown in Figure 4a, the hull 42 and the stiffener 44 can be separated parts which are assembled together before installation in the sandwich structure. Thereby, the stiffener 44 is put in the interior of the hull 42 and the hull 42 is kept opened.

According to the embodiment shown in Figure 4b, the stiffener 44 (indicated by the dotted line) can also be fully integrated in the hull 42. Thus, the hull 42 has internal compressible and expandable characteristics. This single piece hollow body 30 can be made via additive manufacturing, for instance 3D-printing.

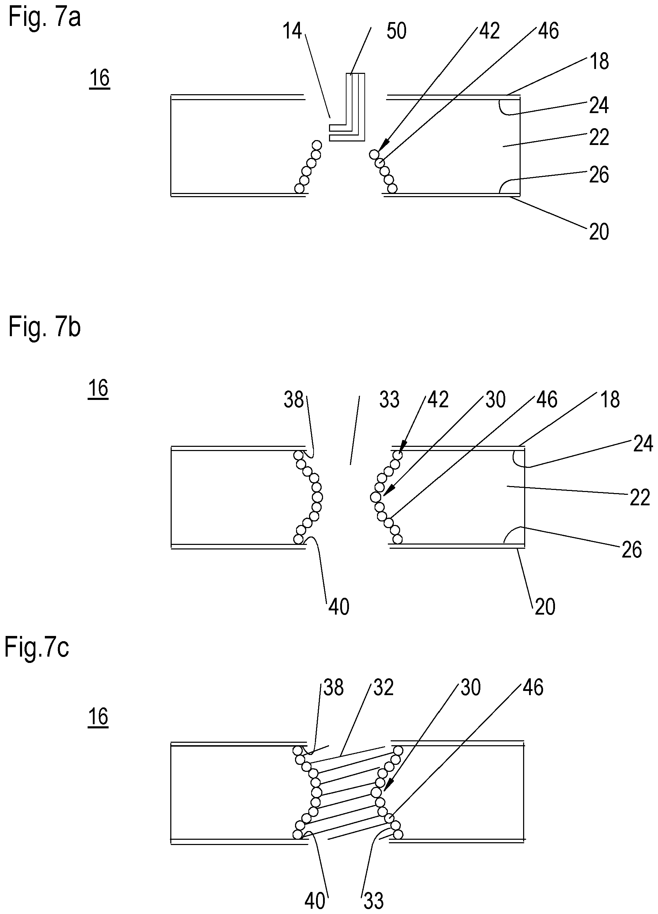

In the third embodiment shown in Figure 4c, the hollow body 30 comprises only a stiff hull 42. A stiffener 44 is not provided. This hull 42 is integrated in the sandwich structure 16 via 3D-printing. For instance, a plurality of material lines 46 is laid up spirally one over the other. This kind of installation method will be explained in more detailed regarding Figure 7a, 7b and 7c.

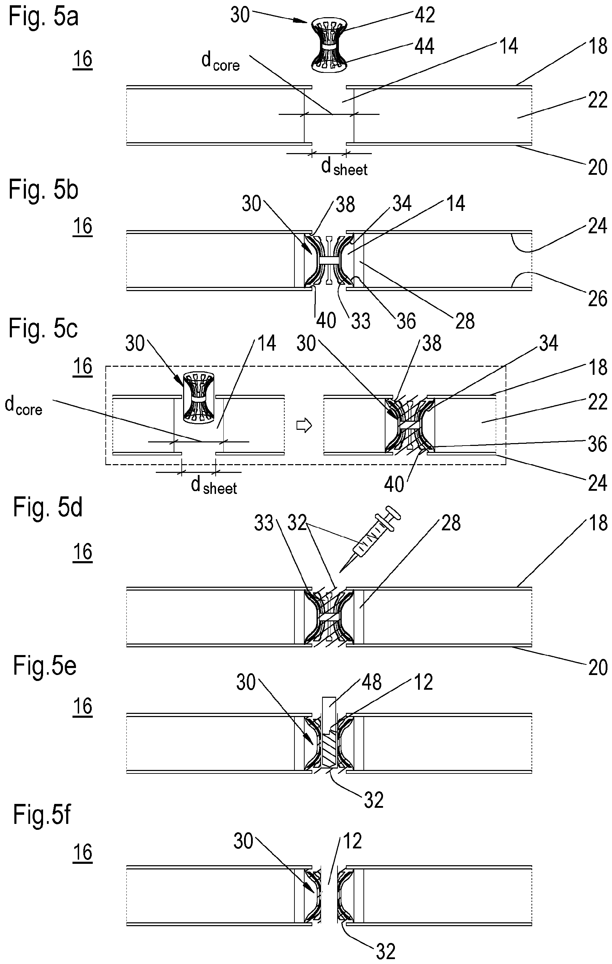

In Figures 5a to 5f, a preferred method according to the invention is shown to install an insert 12 in a sandwich structure 16. Here, the insert 12 is a through hole.

First, a hole 14 is provided in the sandwich structure 16 that extends through the entire sandwich structure 16 and thus through both cover sheets 18, 20. In the area of the core element 22, the hole 14 is radially widened such that an inner diameter d_{core} of the hole in the core structure 22 is larger than (initial) inner diameters dₛₕₑₑₜ of the hole 14 in the cover sheets 18, 20.

Then, the hollow body 30 is inserted in the hole 14. As the hollow body 30 has in its expanded state (normal state) an outer diameter which is larger than the initial hole diameter dₛₕₑₑₜ and preferably also larger than the widened hole diameter d_{core}, the hollow body 30 is compressed radially first and then inserted into the hole 14. In the hole 14, the hollow body 30 expands and moves with its end portions 34, 36 along the inner surfaces 24, 26 such that annular inner surface areas 38, 40 are provided forming the undercut for the potting mass 32. In its final installed position, the filling room 33 for the potting mass 32 is defined so that chambers 28 of the sandwich structure 16 are "sealed" against the potting mass 32.

After the hollow body 30 is (self) aligned, the potting mass 32 is filled in until the filling room 33 is entirely filled with the potting mass 32. Thereby, due to the undercuts, the potting mass 32 connects the upper cover layer 18 and the lower cover sheet 20 and is bonded to them.

When the potting mass 32 is fully cured, the insert 12 in the form of the through hole is provided in the potting mass 32 inside the hollow body 30. The through hole 12 is made in the potting mass 32 by a drilling tool 48.

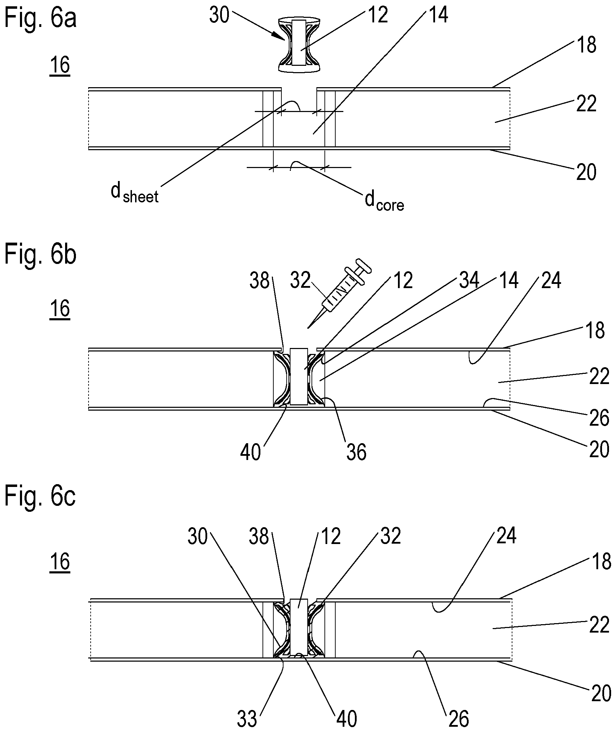

In Figures 6a, 6b and 6c, another preferred method according to the invention is shown to install an insert 12 in a sandwich structure 16. Here, the insert is a screw thread 12.

Contrary to the method illustrated in Figure 5a to 5f, here a blind hole 14 is provided in the sandwich structure 16 that extends through the upper cover sheet 18 and through the core element 22, but not through the lower cover sheet 20. Further on, the insert 12 is provided in the hollow body 30 before filling in the potting mass 32 and not afterwards.

First, the hole 14 is provided in the sandwich structure 16. In the area of the core element 22, the hole 14 is radially widened such that an inner diameter d_{core} of the hole 14 in the core element 22 is larger than (initial) inner diameters dₛₕₑₑₜ of the hole 14 in the upper cover sheet 18.

Then, then hollow body 30 is inserted in the hole 14. However, before positioning the hollow body 30 in the sandwich structure 16, the screw thread 12 is positioned in the hollow body 30. Alternatively, the screw thread 12 is positioned in the hollow body 30 after the positioning of the hollow body 30 in the hole 14.

In its final aligned positioned, an upper end portion 34 of the hollow body 30 defines an annular inner surface area 38 forming the undercut for a potting mass 32. With its lower end portion 36, the hollow body 30 is in contact with the inner surface 26 of the lower cover sheet 20 and forms an inner surface area 40 having a circular shape.

After the hollow body 30 is (self) aligned, the potting mass 32 is filled in until the filling room 33 is entirely filled with the potting mass 32. Thereby, due to the upper undercut (inner surface area 38) and the lower circular inner surface area (inner surface area 40), the potting mass 32 connects the upper cover layer 18 and the lower cover sheet 20 and is bonded to them.

In Figures 7a, 7b and 7c, the hollow body is shown, which

In Figures 7a, 7b and 7c, another preferred method according to the invention is shown adapted to install an insert 12 in a sandwich structure 16. However, in these Figures only the installation of the hollow body 30 in the sandwich structure 16 is illustrated.

Contrary to the method illustrated in Figure 5a to 5f and 6a to 6c, here the hollow body is built up in a hole 14 of the sandwich structure 16 directly. The hollow body 30 has only a potting mass proof hull 42, which is created by 3D-printing material lines 46 one over the other. A print tool 50 is inserted and spirally lays up the material lines 46 until the hull 42 extends from an inner surface 26 of the lower cover sheet 22 to an inner surface 24 of the upper cover sheet 18 and defines a filling room 33 for a potting mass 32. As the hollow body 30 is created directly in the hole 14, the hull 42 does not need any flexible characteristics. Consequently, a stiffener 44 is not necessary. The upper material lines 46 are thus positioned that they define annular inner surface areas 38, 40 forming an undercut for the potting mass 32.

As soon as the material lines are cured, the hollow body 30 is prepared for filling in the potting mass 32.

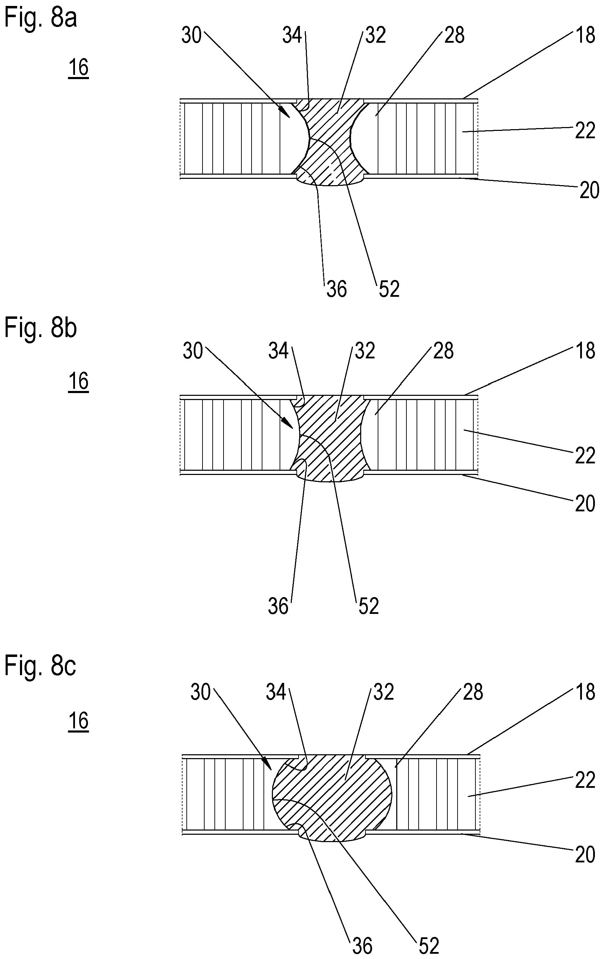

In Figures 8a, 8b and 8c installed hollow bodies 30 are shown which are filled with a potting mass 32. The hollow bodies 30 are positioned in a hole 14 extending through an upper cover sheet 18, a core element 22 and a lower cover sheet 20 and filled with a cured potting mass 32. According to a normal shape of the hollow bodies 30 their final shapes differ from another. All hollow bodies 30 are manufactured in the same way and are of the same type. They are 3D-printed and having a hull 42 with internal compressible and expandable characteristics. A separate stiffener 44 is not provided.

The tubular hollow body 30 shown in Figure 8a has radially reduced centre portion 52 compart to its end portions 34, 36. Thus, the hollow body 30 has a diabolo shape. When filled with the potting mass 32, its centre portion 52 is thinner than its end portions 34, 36.

The tubular hollow body shown in Figure 8b has an auxetic shape. Thus, the hollow body 30 expands when stretched and contracts when compressed. When filled with the potting mass 32, its centre portion 52 is thinner than its end portions 34, 36, but in this embodiment compared with the diabolo shape shown in Figure 8a, the centre portion 52 of the auxetic shape is bigger.

The tubular hollow body shown in Figure 8c has in its normal state a constant diameter over its entire length. Thus, the hollow body 30 has a cylindrical shape. When filled with the potting mass 32, its centre portion 52 is bigger than its end portions 34, 36.

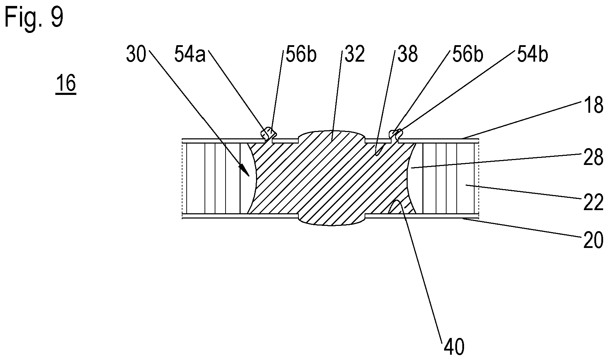

As shown in Figure 9, in order control the distribution of the potting mass 32 in its filling room 33 and in particular in inner surface areas 38, 40 (undercuts) of the cover sheets 18, 20, riser opening 54a, 54b in the upper cover sheet 18 and/or lower cover sheet 20 can be provided. Preferably, the riser openings 54a, 54b are poisoned radially outwards inner surface areas 38, 40. The riser openings 54a, 54b have such a diameter that the potting mass 32 moving along the inner surface areas 38, 40 (entering the undercuts) can escape (reference sign 56a, 56b). The penetration shows the user visually that the potting mass 32 is distributed in a right manner.

Disclosed is a method for placing an insert in a sandwich structure such as a honeycomb structure, wherein a potting mass filling room is provided in a sandwich hole having a room wall preventing penetration of the honeycomb chambers, a sandwich structure and a hollow body forming the filling room.

## Claims

1. A Method for placing an insert (12) in a sandwich structure (16) having two cover sheets (18, 20) and a core element (22), such as a honeycomb structure, which is bonded to inner surfaces (24, 26) of the cover sheets (18, 20),
wherein a hole (14) in the sandwich structure (16) is provided for receiving the insert (12);
wherein the hole (14) is widened such that the core element (22) has a greater inner hole diameter (d_{core}) than the at least one cover sheet (18, 20);
**characterised in**
• Providing a tube-like hollow body (30) in the hole restricting a filling room for a potting mass (32);
wherein the hollow body (30) is such provided in the core element (22) that the filling room (33) extends between opposite inner surface areas (24, 26) of the cover sheets (18, 20); and
• Filling in the potting mass such that the potting mass (32) is distributed on the inner surface areas (38, 40).

2. The method according to claim 1, wherein the hollow body (30) is compressed before installation and expands in the sandwich structure (16) after installation.

3. The method according to claim 1 or 2, wherein the hollow body (30) comprises a stretchable hull (42) and a flexible stiffener (44), wherein the stiffener (44) is positioned inside the hull (42).

4. The hollow body according to claims 1 or 2, wherein a hollow body (30) is used comprising a stretchable hull (42) having integrated stiffening characteristics.

5. The method according to claims 1 and 2, wherein the hollow body (30) is created directly in the hole (14) by laying material lines (46) spirally over each other.

6. The method according to claim 5, wherein at least one riser opening (54a, 54b) is provided in at least one inner surface area (38, 40) such that filling in the potting mass (32) is stopped when the potting mass (32) escapes through the riser openings (54a, 54b).

7. A sandwich structure (16) having two cover sheets (18, 20) and a core element (22) such as a honeycomb structure, which is bonded to inner surfaces (24, 26) of the cover sheets (18, 20),
wherein an insert (12) is provided in a hollow body (30) positioned in a hole (14) of the sandwich structure (16) and filled with a potting mass (32),
wherein the hollow body (30) defines a filling room (33) for the potting mass (32) and extends between opposite inner surface areas (38, 40) of the cover sheets (18, 20) such that the potting mass (32) is distributed on the inner surface areas (38, 40).

8. A compressible and self-expandable hollow body (30), adapted to be used in a method according to any of the claims 1 to 6 or to be installed in a sandwich structure (16) according to claim 7, having a tube-like shape in its self-expanded mode and a circumferentially hull (42) forming a radially potting mass barrier.

9. The hollow body (30) according to claim 8, wherein the hollow body (30) comprises a stretchable hull (42) and a separate flexible stiffener (44).

10. The hollow body (30) according to claim 8, wherein the hollow body comprises a stretchable hull (42) having integrated stiffening characteristics.

11. The hollow body (30) according to any of the claims 8, 9 or 10, wherein the hollow body (30) has a constant diameter over its entire length.

12. The hollow body (30) according to any of the claims 8, 9 or 10, wherein the hollow body (30) has an auxetic shape.

13. The hollow body (30) according to any of the claims 8, 9 or 10, wherein the hollow body (30) has a radially reduced centre portion (52) compart to its end portions (34, 36).
